# EUROPÄISCHE PATENTSCHRIFT

(11) **EP 3 625 473 B1**
(45) Veröffentlichungstag und Bekanntmachung des Hinweises auf die Patenterteilung: **24.05.2023**
(21) Anmeldenummer: 18772768.0
(22) Anmeldetag: 11.09.2018
(51) Int. Cl.: F16D 51/20, F16D 66/00

(54) **TROMMELBREMSE**
DRUM BRAKE
FREIN À TAMBOUR

(30) Priorität: 29.09.2017 DE 102017217410
(43) Veröffentlichungstag der Anmeldung: 25.03.2020
(73) Patentinhaber: Continental Automotive Technologies GmbH, 30165 Hannover (DE)
(72) Erfinder: VON HAYN, Holger, 60488 Frankfurt am Main (DE); GÄDKE, Martin, 60488 Frankfurt am Main (DE); SEFO, Ahmed, 60488 Frankfurt am Main (DE); HOFFMANN, Jens, 60488 Frankfurt am Main (DE); BACH, Uwe, 60488 Frankfurt am Main (DE); SEMSCH, Martin, 60488 Frankfurt am Main (DE); MESSNER, Adrian, 60488 Frankfurt am Main (DE); MEYER, Ulrike, 60488 Frankfurt am Main (DE); KRUSE, Martin, 60488 Frankfurt am Main (DE); RITTER, Wolfgang, 60488 Frankfurt am Main (DE); PHILIPP, Christian, 60488 Frankfurt am Main (DE)
(74) Vertreter: Continental Corporation
(86) Internationale Anmeldenummer: PCT/EP2018/074368
(87) Internationale Veröffentlichungsnummer: WO 2019/063278

(56) Entgegenhaltungen:
- EP-A2- 0 388 040

## Beschreibung

Die Erfindung bezieht sich auf eine Trommelbremse mit einer Bremstrommel und mit zwei an die Bremstrommel anlegbare, auf der Bremsbackenseite einer Trägerplatte befestigten Bremsbacken, die jeweils ein Druckende und ein Widerlagerende aufweisen, wobei sich zwischen den Druckenden eine Spreizeinrichtung und zwischen den Widerlagerenden ein Widerlager mit einer Lastmesseinrichtung befindet, das zur Bestimmung der am Widerlager herrschenden Last dient.

Eine elektrisch betätigbare Trommelbremse, bei der die Spreizeinrichtung aus einem elektrischen Aktuator besteht, wird in der WO 99/53214 beschrieben.

Um bei einer Bremsbetätigung den Aktuator steuern bzw. regeln zu können, werden Informationen über die Stärke der in der Trommelbremse wirkenden Kräfte benötigt. Gemäß der WO 99/53214 wird an einer Stirnseite des Widerlagers ein Lastsensor angeordnet, der die Kraft misst, mit der sich eine der Bremsbacken an dem Widerlager abstützt.

Diese Information ist aber zur Steuerung bzw. Regelung des elektrischen Aktuators nicht genau genug, da bei einer Bremsbetätigung die auf die Bremsbacken wirkenden Reibkräfte unterschiedlich sein können, so dass auch die von den Reibkräften beeinflussten Abstützkräfte für jede Bremsbacke unterschiedlich sein werden. Die Abstützkraft einer Bremsbacke gibt daher nicht genau die Gesamtstärke der in der Trommelbremse wirkenden Kräfte und Bremsmomente wieder.

Die EP 388040 A2 beschreibt eine besonders steif also fest arrangierte, lastmesssensorisch ausgerüstete, Kraftfahrzeugtrommelbremse, ohne funktionalen Mehrwert, enthaltend einsensorisch angereichertes Widerlager einschließlich optische Sensortechnologie mit Lichtstrahlablenkung anhand eines geringfügig dimensionierten und im Mikrobereich minimal begrenzt auslenkbaren Bezirks des Widerlagers.

Die Erfindung beruht daher auf der Aufgabe, eine Trommelbremse mit einer Lastmesseinrichtung am Widerlager und mit Mehrwert zu schaffen, die die Gesamtstärke der in der Trommelbremse wirkenden Kräfte bei einer Bremsbestätigung wiedergibt.

Zur Lösung der Aufgabe wird gemeinsam mit den Merkmalen des Kennzeichens des Patentanspruchs 1 vorgeschlagen, dass das elastische Widerlager mit elastischer Federwirkung als Ganzes als ein unter Last elastisch verformbares massives Bauteil derart vorliegt, dass eine automatische, stromlose Zuspannkraftlimitierungsfunktion vorliegt.

Da die Verformung des Widerlagers durch die beidseitig wirkenden Abstützkräfte bestimmt ist, bedeutet die Bestimmung der Verformung z. B. durch die in dem Widerlager auftretenden mechanischen Spannungen, dass ein Wert für die in der Bremse wirkenden Kräfte erhalten wird, der geeignet ist, den Aktuator zu steuern.

Die Verformung kann auch in der Weise erfasst werden, dass auch die Bremsmomente der jeweils einzelnen Bremsbacken erfasst und bestimmt werden können.

In einer ersten einfachen Ausführung ist das Widerlager in Form eines Ambosses ausgeführt, wobei sich die Widerlagerenden an den gegenüberliegenden Enden des Ambosskopfes anlegen.

Wenn während einer Bremsung Kräfte auf den Ambosskopf ausgeübt werden, werden in diesem mechanische Spannungen aufgebaut bzw. in seinen Sockel eingeleitet.

Diese mechanischen Spannungen können vorzugsweise durch Dehnmessstreifen am Amboss erfasst werden. Bei dieser Ausführung wird somit die Verformung des Widerlagers indirekt über mechanische Spannungen im Widerlager ermittelt.

Eine andere Ausführung sieht vor, dass das Widerlager eine U-förmige Gestalt hat mit einer Basis und zwei Schenkeln, an deren Außenseite die Widerlagerenden der Bremsbacken abgestützt sind, wobei der oder die Sensoren von der Art sind, mit denen sich die unter der Last verändernden Neigung der Schenkel erfasst werden kann.

Dazu können ggf. Dehnmessstreifen an den Schenkeln vorgesehen werden. Eine andere Möglichkeit besteht darin, dass der oder die Sensoren den Abstand der freien Enden der Schenkel erfassen.

Dies kann z. B. mittels Hallsensoren oder auf den anisotropen magnetoresistiven Effekt beruhenden AMR-Sensoren erfolgen, wozu die Schenkel mit Magneten versehen sind, die als Signalgeber für den Hallsensor bzw. AMR-Sensor fungieren.

Vorzugsweise können die freien Enden der Schenkel nach innen gerichtete Vorsprünge aufweisen, deren Stirnflächen durch einen Messspalt voneinander getrennt sind, dessen Breite mit Hilfe einer stromdurchflossenen Tauchspule, die um die Enden der beiden Vorsprünge angeordnet ist, erfasst werden kann, da die Induktivität der Tauchspule von der Breite des Messspaltes abhängt.

Bei der eben beschriebenen Anordnung wird die Basis des Widerlagers an der Außenseite der Trägerplatte angebracht, wobei die Schenkel durch eine Öffnung in der Trägerplatte auf die Bremsbackenseite ragen, wo die Widerlagerenden an ihnen abgestützt sind.

Vorzugsweise erfolgt die Abstützung an den Enden der Schenkel, so dass die Auswirkungen der Abstützkräfte auf den Messspalt maximal sind.

Eine weitere Ausführung der Erfindung besteht darin, dass das Widerlager von einer an der Trägerplatte befestigten Säule getragen wird, die an der Innenseite der Basis anschließt, so dass die Schenkel zur Trägerplatte gerichtet sind.

Die Säule wird dabei vorzugsweise einstückig mit dem Widerlager ausgeführt.

Damit die Verformung durch die eingeleiteten Kräfte um ein Vielfaches vergrößert wird, ist vorgesehen, dass die Schenkel Verlängerungen aufweisen.

Damit die Messeinrichtung auf der Rückseite der Trägerplatte angeordnet werden kann, reichen diese Verlängerungen durch die Trägerplatte, wobei an deren freien Enden Signalgeber befestigt sind, die mit Signalnehmern zusammenwirken, um die Lageänderung der freien Enden der Verlängerungen zu bestimmen.

Bei den Signalgebern kann es sich z. B. um Magnete handeln.

Die Verlängerungen können einstückig mit den Schenkeln ausgeführt werden. Es sind aber auch Verlängerungsstangen denkbar, die in die Enden der Schenkel eingesteckt sind.

Die Säule befindet sich auf einem Sockel, der auf der Vorderseite der Trägerplatte befestigt wird, wobei die Verlängerungen durch Öffnungen in dem Sockel geführt sind. Dies erlaubt es, die Signalnehmer und einen Stecker zum Verbinden der Signalnehmer mit einer Signalauswerteeinheit auf der der Säule abgewandten Seite des Sockels anzuordnen.

Die Signalgeber und Signalnehmer sowie ggf. eine Auswerteelektronik befinden sich damit auf der Rückseite der Trägerplatte und sind vom Bremsbackenbereich abgedichtet räumlich getrennt. Die Hitze der sich bei einer Bremsung erwärmenden Trommel und der Bremsabrieb können somit nicht die Signalerfassung und -auswertung beinträchtigen.

Im Folgenden soll anhand von drei Ausführungsbeispielen die Erfindung näher erläutert werden. Dazu zeigen:
- Fig. 1: eine Bremstrommel mit einer ersten Ausführung des Widerlagers,
- Fig. 2: eine zweite Ausführung des Widerlagers und
- Fig. 3: eine dritte Ausführung des Widerlagers.

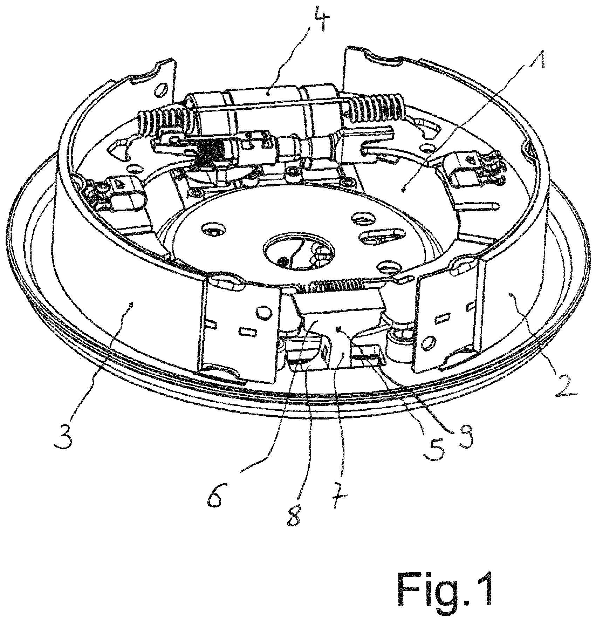

Zunächst wird auf die Fig. 1 Bezug genommen, die neben einer ersten Ausführung des Widerlagers den prinzipiellen Aufbau einer Trommelbremse zeigt.

Auf der Vorderseite einer Trägerplatte 1, die mit einem Achsträger gekoppelt wird, sind zwei Bremsbacken 2, 3 angeordnet. Jede Bremsbacke verläuft auf einem Kreisbogen von etwas weniger als 180° und trägt an ihrer Außenseite einen Bremsbelag. Eine Bremstrommel, die mit der sich drehenden Achse gekoppelt ist und die aus Übersichtsgründen hier nicht gezeigt ist, umschließt die beiden Bremsbacken, so dass bei einer Bremsbetätigung der Bremsbelag gegen die Bremstrommel gedrückt wird, wodurch die sich dadurch einstellenden Reibkräfte die Achse und damit ein auf der Achse montiertes Rad abbremsen.

Zur Bremsbetätigung befindet sich an den Druckenden der Bremsbacken ein Spreizelement 4, das in unterschiedlichster Weise ausgelegt werden kann. Es kann sich um einen Hydraulikzylinder oder um einen elektrischen Aktuator handeln.

Zwischen den anderen Enden der Bremsbacken, nämlich den Widerlagerenden, ist ein Widerlager 5 an der Trägerplatte 1 angeordnet, das in diesem Ausführungsbeispiel als massiver, aus einem Metall bestehenden Amboss ausgeführt ist. Dieser besitzt einen Ambosskopf 6, der über einen Ständer 7 in einen Sockel 8 übergeht. Der Ständer 7 ragt durch eine Öffnung 9 in der Trägerplatte 1, wobei der Sockel 8 an der Rückseite der Trägerplatte, also an der von den Bremsbacken 2, 3 abgewandten Seite befestigt ist.

Die beiden Bremsbacken 2, 3 sind an gegenüberliegenden Stirnseiten des Ambosskopfes 6 angelegt. Bei einer Betätigung der Bremse wird die Spreizeinrichtung 4 geweitet, so dass eine entsprechende Abstützkraft auf beiden Stirnseiten des Ambosskopfes 6 ausgeübt wird. Das Material des Ambosskopfes 6 ist hart, aber dennoch elastisch verformbar, so dass die Kräfte eine Verformung des Ambosskopfes als auch eine Kippung des Ständers 7, soweit die Abstützkräfte nicht gleich groß sind, bewirken.

Diese Verformung bzw. Kippung ist mit mechanischen Spannungen im Amboss verbunden, der durch Dehnmessstreifen erfasst werden kann, die an geeigneten Stellen am Amboss aufgebracht sind.

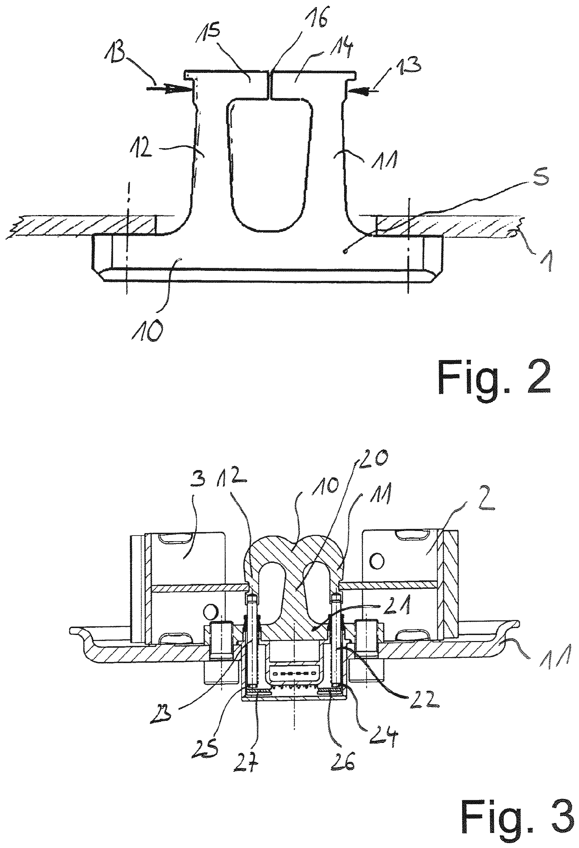

Eine Variante dieser Ausführung ist in Fig. 2 dargestellt. Hier erheben sich aus einer Basis 10 zwei Schenkel 11, 12, an deren freien Enden die Widerlagerenden der Bremsbacken abgestützt sind (Pfeile 13). Die Basis 10 ist ähnlich wie der Sockel 8 an der Rückseite der Trägerplatte 1 befestigt, die Schenkel 11, 12 ragen durch eine Öffnung 9 zur Vorderseite der Trägerplatte 1.

Bei einer Bremsbetätigung werden die Schenkel zusammengedrückt. Der Abstand ihrer freien Enden kann gemessen werden. Dazu besitzen sie vorzugsweise zwei nach innen gerichtete Vorsprünge 14, 15, deren aneinander zugewandte Stirnseiten einen Messspalt 16 bilden. Die Breite des Messspaltes 16 repräsentiert die Verformung des Widerlagers und gibt somit ein Maß für die auf die Schenkel ausgeübte Kraft.

Dieser Abstand kann auf verschiedene Weise gemessen werden. Wenn die Vorsprünge 14, 15 mit Magneten versehen sind, kann deren Abstand von einem linearen Hallsensor oder AMR Sensor (beide hier nicht dargestellt) erfasst werden. Denkbar wäre aber auch, den Spalt mit einer Tauchspule zu umgeben, deren Induktivität sich mit der Breite des Spaltes ändert, so diese ein Maß für die Verformung des Widerlagers 5 bildet.

In der Fig. 3 ist eine weitere Ausführung des Widerlagers 5 dargestellt, bei der die Basis 10 oberhalb der Trägerplatte 1 angeordnet ist, so dass die beiden Schenkel 11, 12 zur Trägerplatte 1 weisen. Um dies zu erreichen, befindet sich zwischen den beiden Schenkeln eine Säule 20, die von einem Sockel 21 ausgeht. In der seitlichen Ansicht erhält das Widerlager damit die Form eines stilisierten Widderkopfes mit Hörnern. Die Schenkel 11, 12, die Basis 10, die Säule 20 und der Sockel 21 sind einstückig ausgeführt. Der Sockel 21 ist auf der Vorderseite der Trägerplatte 1 befestigt.

Denkbar ist eine - hier nicht dargestellte - Verschraubung des Sockels 21 direkt mit dem Achskörper, indem auf der Trägerplatte entsprechende Durchgriffe bereitgestellt werden, wobei ggf. die Trägerplatte im Kraftfluss mit verschraubt wird. Auf diese Weise ist der Sockel 21 sehr verwindungssteif angebunden.

Die Widerlagerenden der beiden Bremsbacken sind an den Außenseiten der beiden Schenkel 11, 12 abgestützt.

Um den Abstand der beiden Schenkel messen zu können, besitzen diese Verlängerungen 22, 23 in Form von Stäben, die durch Öffnungen im Sockel 21 zur Rückseite der Trägerplatte 1 weisen. Dort befindet sich eine Messvorrichtung. Diese besteht aus Magneten 24, 25 an den freien Enden der Stäbe 22, 23. Den Magneten liegen magnetfeldempfindliche Sensoren (z. B. Hallsensoren oder AMR-Sensoren) gegenüber, die auf Platinen 26, 27 angebracht sind.

In den Öffnungen des Sockels 21 befinden sich Manschetten, die die Stäbe 22, 23 gegenüber der Öffnung abdichten. Die ganze Messanordnung befindet sich somit auf der von der Bremseinrichtung abgewandten Seite und ist daher vor Einwirkungen des Bremsabriebes und Hitze geschützt.

Das Widerlager 5 mit der Messeinrichtung kann vormontiert werden und als Ganzes an der Trägerplatte 1 befestigt werden.

Jedes elastische Widerlager 5 ist mit dem Mehrwert verknüpfbar, dass durch dessen kraftspeicherartig ausgelegte, reversible Elastizität mechanisch sowie automatisch-stromlos, die Einstellung einer zerstörerisch großen, übermäßigen Zuspannkraft gedämpft beziehungsweise vermieden werden kann (automatische, stromlose Zuspannkraftlimitierungsfunktion). Ein weiterer Vorteil bezieht sich auf eine Verbesserung einer Parkbremsfunktion unter veränderten Randbedingungen. Denn es ist beispielsweise recht einfach ermöglicht, eine automatische Zuspannkraftkompensation vorzusehen, falls beispielsweise eine heiß abgestellte Bremstrommel infolge Abkühlung schrumpft. Denn herkömmliche Trommelbremsen reagieren unter dieser geänderten Randbedingung nachteilig mit selbsttätigem Zuspannkraftanstieg. Umgekehrt hilft die elastische Federwirkung des Widerlagers 5 automatisch sogar nach einer Fahrzeugabstellung bei großer Kälte und wenn sich die Bremstrommel später unter Erwärmung (beispielsweise infolge Sonneneinstrahlung) erwärmt (also ausdehnt). Denn die herkömmlichen Trommelbremsen reagieren unter dieser geänderten Randbedingung nachteilig mit selbsttätigem Zuspannkraftverlust, was zusätzlichen Aufwand durch die Notwendigkeit zusätzlicher Nachstellvorgänge auslösen kann.

### Bezugszeichenliste

- 1: Trägerplatte
- 2: Bremsbacken
- 3: Bremsbacken
- 4: Spreizeinrichtung
- 5: Widerlager
- 6: Ambosskopf
- 7: Ständer
- 8: Sockel
- 9: Öffnung
- 10: Basis
- 11: Schenkel
- 12: Schenkel
- 13: Pfeile
- 14: Vorsprünge
- 15: Vorsprünge
- 16: Messspalt

- 20: Säule
- 21: Sockel
- 22: Verlängerungen
- 23: Verlängerungen
- 24: Magnete
- 25: Magnete
- 26: Platine
- 27: Platine

## Patentansprüche

1. Trommelbremse mit einer Bremstrommel und mit zwei an die Bremstrommel anlegbare, auf der Bremsbackenseite einer Trägerplatte (1) befestigten Bremsbacken (2, 3), die jeweils ein Druckende und ein Widerlagerende aufweisen, wobei sich zwischen den Druckenden eine Spreizeineinrichtung (4) und zwischen den Widerlagerenden ein Widerlager (5) mit einer Lastmesseinrichtung befindet, das zur Bestimmung der am Widerlager (5) herrschenden Last dient, das Widerlager (5) ein unter Last verformbares Mittel aufweist, und dass ein oder mehrere Sensoren vorgesehen sind, die die sich unter Last einstellende Verformung des Mittels erfassen, **dadurch gekennzeichnet, dass** das elastische Widerlager (5) mit elastischer Federwirkung als Ganzes als ein unter Last elastisch verformbares massives Bauteil derart vorliegt, dass eine automatische, stromlose Zuspannkraftlimitierungsfunktion vorliegt.

2. Trommelbremse nach Anspruch 1, **dadurch gekennzeichnet, dass** das Widerlager (5) die Form eines Ambosses hat, wobei die Widerlagerenden an den gegenüberliegenden Enden des Ambosskopfes (6) anliegen.

3. Trommelbremse nach Anspruch 2, **dadurch gekennzeichnet, dass** zur Erfassung der Verformung des Ambosses an diesen Dehnmessstreifen angebracht sind.

4. Trommelbremse nach Anspruch 1, **dadurch gekennzeichnet, dass** das Widerlager (5) eine U-förmige Gestalt hat mit einer Basis (10) und zwei Schenkeln (11, 12), an deren Außenseiten die Widerlagerenden abgestützt sind, und dass der oder die Sensoren von der Art sind, mit denen sich die unter der Last verändernde Neigung der Schenkel (11, 12) erfasst werden kann.

5. Trommelbremse nach Anspruch 4, **dadurch gekennzeichnet, dass** der oder die Sensoren den Abstand der freien Enden der Schenkel (11, 12) erfassen.

6. Trommelbremse nach Anspruch 4 oder 5, **dadurch gekennzeichnet, dass** die freien Enden der Schenkel (11, 12) nach innen gerichtete Vorsprünge (14, 15) aufweisen, deren Stirnflächen durch einen Messspalt (16) voneinander getrennt sind.

7. Trommelbremse nach einem der Ansprüche 4 bis 6, **dadurch gekennzeichnet, dass** die Basis (10) an der Außenseite der Trägerplatte (1) angebracht ist und die Schenkel (11, 12) durch eine Öffnung in der Trägerplatte (1) auf die Bremsbackenseite ragen, wo die Widerlagerenden an ihnen abgestützt sind.

8. Trommelbremse nach einem der Ansprüche 4 bis 6, **dadurch gekennzeichnet, dass** das Widerlager (5) von einer an der Trägerplatte (1) befestigten Säule (20) getragen wird, die an die Innenseite der Basis (10) anschließt, so dass die Schenkel (11, 12) zur Trägerplatte (1) gerichtet sind.

9. Trommelbremse nach Anspruch 8, **dadurch gekennzeichnet, dass** die Säule (20) einstückig mit dem Widerlager (5) ausgeführt ist.

10. Trommelbremse nach Anspruch 5 oder 6, **dadurch gekennzeichnet, dass** die Schenkel (11, 12) Verlängerungen (22, 23) aufweisen.

11. Trommelbremse nach Anspruch 10, **dadurch gekennzeichnet, dass** die Verlängerungen (22, 23) durch die Trägerplatte (1) reichen und dass an deren freien Enden Signalgeber befestigt sind, die mit Signalnehmern zusammenwirken, um die Lageänderung der freien Enden zu bestimmen.

12. Trommelbremse nach Anspruch 11, **dadurch gekennzeichnet, dass** die Signalgeber Magnete (24, 25) sind.

13. Trommelbremse nach Anspruch 11, **dadurch gekennzeichnet, dass** die Säule (20) einstückig mit einem Sockel (21) ausgeführt ist, der auf der Innenseite der Trägerplatte (1) befestigt ist, wobei die Verlängerungen (22, 23) durch Öffnungen in dem Sockel (21) geführt sind und dass sich auf der der Säule (20) abgewandten Seite des Sockels (21) die Signalnehmer und ein Stecker zum Verbinden der Signalnehmer mit einer Signalauswerteeinheit angeordnet sind.

## Claims

1. Drum brake with a brake drum and with two brake shoes (2, 3) which can be applied to the brake drum and are attached on the brake shoe side of a carrier plate (1) and each comprise a pressure end and an abutment end, wherein a spreader device (4) is arranged between the pressure ends, and an abutment (5) with a load measuring device is provided between the abutment ends, which device serves to determine the load prevailing at the abutment (5), the abutment (5) has a means which can be deformed under load, and one or more sensors which detect the deformation of the abutment occurring under load are provided, **characterized in that** the elastic abutment (5) with an elastic spring effect as a whole takes the form of a solid component which can be deformed elastically under load in such a way that there is an automatic, unpowered function to limit application force.

2. Drum brake according to Claim 1, **characterized in that** the abutment (5) has the form of an anvil, wherein the abutment ends lie at opposite ends of the anvil head (6).

3. Drum brake according to Claim 2, **characterized in that** to detect the deformation of the anvil, strain gauges are attached thereto.

4. Drum brake according to Claim 1, **characterized in that** the abutment (5) has a U-shape with a base (10) and two limbs (11, 12), the outsides of which support the abutment ends, and **in that** the sensor or sensors are of a type which can detect the slope of the limbs (11, 12) which changes under load.

5. Drum brake according to Claim 4, **characterized in that** the sensor or sensors detect the distance between the free ends of the limbs (11, 12).

6. Drum brake according to Claim 4 or 5, **characterized in that** the free ends of the limbs (11, 12) have inwardly oriented protrusions (14, 15), the end faces of which are separated from each other by a measurement gap (16).

7. Drum brake according to one of Claims 4 to 6, **characterized in that** the base (10) is attached to the outside of the carrier plate (1) and the limbs (11, 12) protrude through an opening in the carrier plate (1) on the brake shoe side where the abutment ends are supported.

8. Drum brake according to one of Claims 4 to 6, **characterized in that** the abutment (5) is carried by a post (20) attached to the carrier plate (1) and adjoining the inside of the base (10) so that the limbs (11, 12) are oriented towards the carrier plate (1).

9. Drum brake according to Claim 8, **characterized in that** the post (20) is configured integrally with the abutment (5).

10. Drum brake according to Claim 5 or 6, **characterized in that** the limbs (11, 12) have extensions (22, 23).

11. Drum brake according to Claim 10, **characterized in that** the extensions (22, 23) reach through the carrier plate (1) and **in that** attached at their free ends are signal emitters which cooperate with signal receivers in order to determine the positional change of the free ends.

12. Drum brake according to Claim 11, **characterized in that** the signal emitters are magnets (24, 25).

13. Drum brake according to Claim 11, **characterized in that** the post (20) is configured integrally with a pedestal (21) which is attached to the inside of the carrier plate (1), wherein the extensions (22, 23) are guided through openings in the pedestal (21), and **in that** the signal receivers and a plug for connecting the signal receivers to a signal analysis unit are arranged on the side of the pedestal (21) facing away from the post (20).

## Revendications

1. Frein à tambour comprenant un tambour de frein et deux mâchoires de frein (2, 3) qui peuvent être placées sur le tambour de frein et fixées du côté mâchoire de frein d'une plaque de support (1) et qui comportent chacune une extrémité de pression et une extrémité de contre-appui, un dispositif d'écartement (4) étant situé entre les extrémités de pression et un contre-appui (5) muni d'un dispositif de mesure de charge étant situé entre les extrémités de contre-appui, lequel contre-appui sert à déterminer la charge exercée sur le contre-appui (5), le contre-appui (5) comportant un moyen déformable sous charge, et un ou plusieurs capteurs étant prévus qui détectent la déformation sous charge du moyen, **caractérisé en ce que** le contre-appui élastique (5) à effet à ressort élastique est présent dans son ensemble en tant que composant solide déformable élastiquement sous charge de manière à présenter une fonction de limitation de force de serrage automatique sans alimentation.

2. Frein à tambour selon la revendication 1, **caractérisé en ce que** le contre-appui (5) a la forme d'une enclume, les extrémités de contre-appui venant en appui sur les extrémités opposées de la tête d'enclume (6).

3. Frein à tambour selon la revendication 2, **caractérisé en ce que**, pour détecter la déformation de l'enclume, des jauges de contrainte sont fixées à celle-ci.

4. Frein à tambour selon la revendication 1, **caractérisé en ce que** le contre-appui (5) a une forme de U avec une base (10) et de deux branches (11, 12) sur les côtés extérieurs desquelles les extrémités de contre-appui sont en appui, et **en ce que** le ou les capteurs sont du type permettant de détecter l'inclinaison des branches (11, 12) qui est variable en fonction de la charge.

5. Frein à tambour selon la revendication 4, **caractérisé en ce que** le ou les capteurs détectent la distance entre les extrémités libres des branches (11, 12).

6. Frein à tambour selon la revendication 4 ou 5, **caractérisé en ce que** les extrémités libres des branches (11, 12) comportent des saillies (14, 15), dirigées vers l'intérieur, dont les surfaces frontales sont séparées l'une de l'autre par un intervalle de mesure (16).

7. Frein à tambour selon l'une des revendications 4 à 6, **caractérisé en ce que** la base (10) est fixée sur le côté extérieur de la plaque de support (1) et les branches (11, 12) font saillie par une ouverture ménagée dans la plaque de support (1) du côté de la mâchoire de frein où les extrémités de contre-appui s'appuient sur elles.

8. Frein à tambour selon l'une des revendications 4 à 6, **caractérisé en ce que** le contre-appui (5) est porté par une colonne (20) qui est fixée à la plaque de support (1) et qui se raccorde au côté intérieur de la base (10) de sorte que les branches (11, 12) soient dirigées vers la plaque de support (1).

9. Frein à tambour selon la revendication 8, **caractérisé en ce que** la colonne (20) est réalisée d'une seule pièce avec le contre-appui (5).

10. Frein à tambour selon la revendication 5 ou 6, **caractérisé en ce que** les branches (11, 12) comportent des prolongements (22, 23).

11. Frein à tambour selon la revendication 10, **caractérisé en ce que** les prolongements (22, 23) traversent la plaque de support (1) et **en ce que** des transmetteurs de signaux sont fixés à leurs extrémités libres, lesquels coopèrent avec des récepteurs de signaux pour déterminer le changement de position des extrémités libres.

12. Frein à tambour selon la revendication 11, **caractérisé en ce que** les transmetteurs de signaux sont des aimants (24, 25).

13. Frein à tambour selon la revendication 11, **caractérisé en ce que** la colonne (20) est réalisée d'une seule pièce avec une embase (21) qui est fixée sur le côté intérieur de la plaque de support (1), les prolongements (22, 23) étant guidés à travers des ouvertures ménagées dans l'embase (21), et **en ce que** les récepteurs de signaux et un connecteur, destiné à relier les récepteurs de signaux à une unité d'évaluation de signaux, sont disposés sur le côté de l'embase (21) qui est à l'opposé de la colonne (20).
